# EUROPEAN PATENT SPECIFICATION

(11) **EP 1 599 540 B1**
(45) Date of publication and mention of the grant of the patent: **02.09.2009**
(21) Application number: 03816273.1
(22) Date of filing: 06.03.2003
(51) Int. Cl.: C08L 23/28, C08L 77/00

(54) **THERMOPLASTIC ELASTOMER COMPOSITION WITH AN IMPROVED RUBBER PELLETIZATION PROCESS**
THERMOPLASTISCHE ELASTOMERZUSAMMENSETZUNG MIT VERBESSERTEM GUMMIPELLETIERVERFAHREN
COMPOSITION ELASTOMERE THERMOPLASTIQUE OBTENUE PAR UN PROCEDE DE PELLETISATION DE CAOUTCHOUC AMELIORE

(43) Date of publication of application: 30.11.2005
(73) Proprietor: THE YOKOHAMA RUBBER CO., LTD., Tokyo 105-8685 (JP); ExxonMobil Chemical Patents Inc., Houston, TX 77079 (US)
(72) Inventor: SOEDA, Yoshihiro, c/o The Yokohama Rubber Co., Ltd, Hiratsuka-shi, Kanagawa 254-8601 (JP); TSOU, Andy, Haishung, Houston, TX 77059 (US); CARAWAY, Joyce, Foshee, Crosby, TX 77532 (US)
(74) Representative: UEXKÜLL & STOLBERG
(86) International application number: PCT/US2003/006702
(87) International publication number: WO 2004/081108

(56) References cited:
- EP-A- 0 857 761
- EP-A- 0 969 039
- US-A- 6 013 727
- US-B1- 6 346 571

## Description

### Technical Field

The present invention provides an improved thermoplastic elastomer composition having excellent durability, heat resistance and flexibility, while possessing superior air impermeability. In particular, the present invention relates to a thermoplastic elastomer composition using an antioxidant as an anti-blocking agent, where the antioxidant used has a melting temperature of more than 70°C and less than 200°C.

### Background Art

EP722850B1 disclosed a low-permeability thermoplastic elastomer composition that is superior as a gas-barrier layer in pneumatic tires. This thermoplastic composition comprises a low-permeability thermoplastic matrix, such as polyamides or blends of polyamides, in which a low-permeability rubber such as brominated poly(isobutylene-co-p-methylstyrene) (i.e., BIMS) is dispersed. Similarly, US-B1-6,346,571 and US-A-6,013,727 disclose a thermoplastic elastomeric composition comprising a dynamically vulcanized blend of a halogenated isobutylene elastomer and a thermoplastic engineering resin (e.g., polyamide) matrix and an antioxidant (e.g., phosphate oder hindered phenol) directly blended into the mixture of the elastomer and the polyamide. Subsequently, in both EP857761A1 and EP969039A1, the viscosity ratio between the thermoplastic matrix and the rubber dispersion was specified as a function of the volume fraction ratio and independently to be close to one in order to achieve phase continuity in thermoplastic and fine rubber dispersions, respectively. Criticality of smaller rubber dispersions was recognized in EP969039A1 in these thermoplastic elastomers for delivering acceptable durability especially for their usage as innerliners in pneumatic tires.

### Summary of Invention

The object of the present invention is to provide a thermoplastic elastomer composition having an improved durability, heat resistance and flexibility, while possessing superior air impermeability.

In accordance with the present invention, there is provided a thermoplastic elastomer composition having improved durability, heat resistance and flexibility comprising a dynamically vulcanized blend of (A) a halogenated isobutylene elastomer, (B) polyamide and (C) a granulator composed of a triphosphite antioxidant, either alone or in combination with other antioxidant(s), having a melting point of more than 70°C and less than 200°C, the halogenated isobutylene elastomer (A) being dispersed as a domain in a continuous phase of the polyamide (B), wherein the halogenated isobutylene elastomer (A) is in the form of pellets coated with the granulator (C) and is dynamically vulcanized in the presence of the granulator (C) as an anti-blocking agent.

### Disclosure of Invention

In this specification and in the claims which follow, the singular forms "a", "an" and "the" include plural referents unless the context clearly dictates otherwise.

The present invention relates to a thermoplastic elastomer composition, more particularly relates to a thermoplastic elastomer composition excellent in durability and in impermeability. This thermoplastic elastomer contains rubber particles with improved rubber pelletization process. More specifically, rubber compounds are pelletized with the usage of antioxidants as the anti-blocking agent where antioxidants used having a melting temperature of more than 70°C and less than 200°C.

Most specifically, the rubber compounds and polyamides are dynamically vulcanized in the presence of triphosphite antioxidant, either alone or in combination with other antioxidant(s), at preferably 5 phr (i.e., parts by weight per hundred rubber) or less, more preferably 4 phr or less, still more preferably 3 phr or less, further more preferably 2 phr or less, most preferably, at 1 phr or less.

Typical examples of the triphosphite antioxidants are tris(di-tertiary butylphenyl)phosphite, tris-nonylphenylphosphite. Examples of other antioxidants are hindered phenol antioxidants like 4,4'-butylidene bis-(3-methyl-6-tert-butylphenol), 2-4-bis[(octylthio)methyl]-o-cresol.

The thermoplastic elastomer composition is a blend of a halogenated isobutylene elastomer and a polyamide, which is subjected to dynamic vulcanization.

The term "dynamic vulcanization" is used herein to connote a vulcanization process in which the engineering resin and a vulcanizable elastomer are vulcanized under conditions of high shear. As a result, the vulcanizable elastomer is simultaneously crosslinked and dispersed as fine particles of a "micro gel" within the engineering resin matrix.

Dynamic vulcanization is effected by mixing the ingredients at a temperature which is at or above the curing temperature of the elastomer in equipment such as roll mills, Banbury^{®} mixers, continuous mixers, kneaders or mixing extruders, e.g., twin screw extruders. The unique characteristic of the dynamically cured compositions is that, notwithstanding the fact that the elastomer component may be fully cured, the compositions can be processed and reprocessed by conventional thermoplastic resin processing techniques such as extrusion, injection molding, compression molding, etc. Scrap or flashing can be salvaged and reprocessed.

In a preferred embodiment the halogenated isobutylene elastomer component include copolymers of isobutylene and para-alkylstyrene, such as described in European Patent Application 0 344 021. The copolymers preferably have a substantially homogeneous compositional distribution. Preferred alkyl groups for the para-alkyl styrene moiety include alkyl groups having from 1 to 5 carbon atoms, primary haloalkyl, secondary haloalkyl having from 1 to 5 carbon atoms and mixtures thereof. A preferred copolymer comprises isobutylene and para-methylstyrene. Suitable halogenated isobutylene elastomer components include copolymers (such as brominated isobutylene-paramethylstyrene copolymers) having a number average molecular weight Mn of at least about 25,000, preferably at least about 50,000, preferably at least about 75,000, preferably at least about 100,000, preferably at least about 150,000. The copolymers may also have a ratio of weight average molecular weight (Mw) to number average molecular weight (Mn), i.e., Mw/Mn of less than about 6, preferably less than about 4, more preferably less than about 2.5, most preferably less than about 2.0. In another embodiment, suitable halogenated isobutylene elastomer components include copolymers (such as brominated isobutylene-paramethylstyrene copolymers) having a Mooney viscosity (1+4) at 125°C (as measured by ASTM D 1646-99) of 25 or more, preferably 30 or more, more preferably 40 or more.

Preferred brominated copolymers of isobutylene and para-methylstyrene include those having 5 to 12 weight % para-methylstyrene, 0.3 to 1.8 mol % brominated para-methylstyrene, and a Mooney viscosity of 30 to 65(1+4) at 125°C (as measured by ASTM D 1646-99).

The halogenated isobutylene elastomer component (A) according to the present invention can be prepared from isobutylene and about 0.5 to 25% by weight, preferably about 2 to 20% by weight, based upon the total amount of the comonomers, of p-alkylstyrene, preferably p-methylstyrene, followed by the halogenation. The content of the halogen (e.g., Br and/or Cl, preferably Br) is preferably less than about 10% by weight, more preferably about 0.1 to about 7% by weight, based upon the total amount of the copolymer.

The copolymerization can be carried out in a known manner as described in, for example, European Patent Publication No. EP-34402/A published November 29, 1989 and the halogenation can be carried out in a known method as described in, for example, U.S. Patent No. 4548995.

The halogenated isobutylene elastomer preferably has the number-average molecular weight (Mn) of at least about 25,000, more preferably at least about 100,000 and a ratio of the weight-average molecular weight Mw to the number-average molecular weight (Mn), i.e., Mw/Mn of preferably less than about 10, more preferably less than about 8.

The polyamides usable in the present invention are thermoplastic polyamides (nylons) comprise crystalline or resinous, high molecular weight solid polymers including copolymers and terpolymers having recurring amide units within the polymer chain. Polyamides may be prepared by polymerization of one or more epsilon lactams such as caprolactam, pyrrolidione, lauryllactam and aminoundecanoic lactam, or amino acid, or by condensation of dibasic acids and diamines. Both fiber-forming and molding grade nylons are suitable. Examples of such polyamides are polycaprolactam (Nylon 6), polylauryllactam (Nylon 12), polyhexamethyleneadipamide (Nylon 66), polyhexamethyleneazelamide (Nylon 69), polyhexamethylenesebacamide (Nylon 610), polyhexamethyleneisophthalamide (Nylon 6 IP) and the condensation product of 11-amino-undecanoic acid (Nylon 11). Nylon 6 (N6), Nylon 11 (N11), Nylon 12 (N12), a Nylon 6/66 copolymer (N6/66), Nylon 610 (N610), Nylon 46, Nylon MXD6, Nylon 69 and Nylon 612 (N612) may also be used. The copolymers thereof any blends thereof may also be used. Additional examples of satisfactory polyamides (especially those having a softening point below 275°C.) are described in Kirk-Othmer, Encyclopedia of Chemical Technology, v. 10, page 919, and Encyclopedia of Polymer Science and Technology, Vol. 10, pages 392 - 414. Commercially available thermoplastic polyamides may be advantageously used in the practice of this invention, with linear crystalline polyamides having a softening point or melting point between 160°C - 230°C being preferred.

The amounts of the elastomer (A) and the polyamide (B) usable in the present invention is preferably 95 to 25 parts by weight and 5 to 75 parts by weight, more preferably 90 to 25 parts by weight and 10 to 75 parts by weight, respectively, provided that the total amount of the components (A) and (B) is 100 parts by weight.

In accordance with the present invention there is also provided a method for making a thermoplastic elastomer composition comprising the steps of:
(i) forming a mixture comprising a halogenated isobutylene elastomer and at least one curative therefore,
(ii) producing pellets from the mixture formed in (i) and coating the resultant pellets with a granulator composed of a triphosphite antioxidant, either alone or in combination with other antioxidant(s), having a melting temperature of more than 70°C and less than 200°C as an anti-blocking agent by adding said antioxidant during the pelletization process,
(iii) providing a polyamide and additives, and
(iv) mixing the coated pellets produced in (iii) and the polyamide under dynamic vulcanization conditions to produce a thermoplastic elastomer composition, wherein the elastomer is dispersed as a domain in a continuous phase of the polyamide.

The method for producing the thermoplastic elastomer composition in the present invention consists of melting and kneading the halogenated isobutylene elastomer (A), the polyamide (B) and the antioxidant (C) by a biaxial kneader/extruder etc. to disperse the elastomer (A) in the polyamide (B) forming the continuous phase. When vulcanizing the elastomer (A), a vulcanization agent is added, while kneading, and the elastomer component is dynamically vulcanized. Further, the various compounding agents (except vulcanization agent) for the elastomer and the polyamide may be added during the above kneading, but preferably are mixed in advance before the kneading. The kneader used for kneading the polyamide and the elastomer is not particularly limited. Examples thereof are a screw extruder, kneader, banbury mixer, biaxial kneader/extruder, etc. Among these, it is preferable to use a biaxial kneader/extruder for the kneading of the thermoplastic resin and the elastomer and the dynamic vulcanization of the elastomer. Further, two or more types of kneaders may be used for successive kneading. As the conditions for the melting and kneading, the temperature should be at least the temperature where the polyamide melts. Further, the shear rate at the time of kneading is preferably 500 to 7500 sec⁻¹. The time for the overall kneading is from 30 seconds to 10 minutes. Further, when adding a vulcanization agent, the vulcanization time after addition is preferably 1 seconds to 5 minutes. The elastomer composition produced by the above method is then extruded or calendered into a film. The method of forming the film may be a usual method of forming a film from a thermoplastic resin or thermoplastic elastomer.

The elastomer composition according to the present invention may contain, in addition to the above-mentioned essential ingredients, a vulcanization or cross-linking agent, a vulcanization or cross-linking accelerator, various types of oils, an antiaging agent, reinforcing agent, plasticizer, softening agent, or other various additives generally mixed into general rubbers. The compounds are mixed and vulcanized by general methods to make the composition which may then be used for vulcanization or cross-linking. The amounts of these additives added may be made the amounts generally added in the past so long as they do not run counter to the object of the present invention.

### Examples

The present invention will now be further illustrated by, but is by no means limited to, the following Examples.
1. Resin Component
   Nylon (Nylon 6/66): Ube Nylon (Ube Kousan)
   Additives: antioxidant: Irganox 1098, Tinuvin 622LD, and CuI
2. Elastomer Component
   BIMS: Brominated copolymer of isobutylene and para-methylstyrene sold under the tradename EXXPRO 89-4 by ExxonMobil Chemical Company having a mooney viscosity of about 45, approximately 5 weight % para-methylstyrene and about 0.75 mol% bromine
   ZnO: Zinc oxide curative
   St-acid: Stearic acid curative
   ZnSt: Zinc sterate curative
   DM16D: Tertiary amine: ARMEEN DM16D (AKZO NOBEL)
3. Granulator
   Talc: NIPPON TALC K.K.
   IRGAFOS 168: antioxidant available from Ciba
   Curing Agent: ZnO, St-acid and ZnSt (see Table 1)

### The test methods used for evaluation of the Examples and Comparative Examples were as follows:

### A) Durability (Cold Temperature Fatigue Cycles)

Film and a carcass compound were laminated together with an adhesive and cured at 190°C for 10 min. A JIS No. 2 dumbbell shape was then punched out and used for durability test at -20°C at 6.67 Hz and 40% strain.

### B) Tensile Mechanical Properties

All tensile tests are based on JIS K6251 "Tensile Test Method of Vulcanized Rubber".

For Examples 1, 2, 4 and 5, the ingredients (parts by weight), other than Nylon and additives, shown in Table 1 were kneaded in a banbury mixer (discharge temp. = 120°C) for 2 minutes, followed by pelletizing the resultant composition in a conventional manner with coating with the granulator. For Example 3 (Comparative), Exxpro 89.4 was kneaded in a bambury mixer, followed by pelletizing in a conventional manner with coating with the granulator. Thereafter, the resultant pellets and Nylon and the additives shown in Table 1 were dynamically vulcanized by a biaxial extruder at 230°C and a shear rate of 1000 s⁻¹.

**Table 1: RECIPE**

| (parts by weight) | | | | | |
|---|---|---|---|---|---|
| Ingredient | Example | | | | |
| | 1*¹ | 2 | 3*¹ | 4*¹ | 5 |
| Exxpro 89-4 | 100 | 100 | 100 | 100 | 100 |
| ZnO | 0.15 | 0.15 | 0.15 | 0.15 | 0.15 |
| St-acid | 0.6 | 0.6 | 0.6 | 0.6 | 0.6 |
| ZnSt 0.3 | | 0.3 | 0.3 | 0.3 | 0.3 |
| DM16D | - | - | - | 1.0 | 1.0 |
| Granulator | Talc | IRGAFOS 168 | Cure agent | Tale | IRGAFOS 168 |
| Nylon | 98 | 98 | 98 | 98 | 98 |
| Additives | 1.23 | 1.23 | 1.23 | 1.23 | 1.23 |
| Total | 200.28 | 200.28 | 199.23 | 201.28 | 201.28 |

| | | | | | |
|---|---|---|---|---|---|
| *1: Comparative Example | | | | | |

**Table 2: Mechanical properties**

| Example | 1 | 2 | 3 |
|---|---|---|---|
| TB at -20°C (MPa) | 44.2 | 43.6 | 38.1 |
| EB at -20°C (%) | 320 | 320 | 290 |
| Durability × 10⁶ times | 1.0 - 1.5 | 1.0 - 1.5 | 0.1 |

The films having the composition listed in Table 1 were blown using same blow die. Mechanical properties are listed in Table 2.

The film using the antioxidant as a granulator has good elongation compared to cure agent as a granulator.

Also, the film using antioxidant as a granulator has same excellent low temperature durability and low temperature stability as the film using talc.

**Table 3: Mechanical properties**

| Example | 4 | 5 |
|---|---|---|
| TB at -20°C (MPa) | 49.0 | 45.6 |
| EB at -20°C (%) | 375 | 370 |
| Durability × 10⁶ times | 1.0 | 1.2 |

The films having the composition listed in Table 1 were blown using the same blow die. The mechanical properties thereof are listed in Table 3. The mechanical properties of the thermoplastic elastomer containing the rubber particles with improved rubber pelletization process are good. The film has the same mechanical properties. The film using the antioxidant as a granulator has the same elongation as in the case of using talc as a granulator. Also, the film using antioxidant as a granulator has the same excellent low temperature durability.

## Claims

1. A thermoplastic elastomer composition having improved durability, heat resistance and flexibility comprising a dynamically vulcanized blend of (A) a halogenated isobutylene elastomer, (B) polyamide and (C) a granulator composed of a triphosphite antioxidant, either alone or in combination with other antioxidant(s), having a melting point of more than 70°C and less than 200°C, the halogenated isobutylene elastomer (A) being dispersed as a domain in a continuous phase of the polyamide (B), wherein the halogenated isobutylene elastomer (A) is in the form of pellets coated with the granulator (C) and is dynamically vulcanized in the presence of the granulator (C) as an anti-blocking agent.

2. A thermoplastic elastomer composition as claimed in claim 1, wherein the amount of the halogenated isobutylene elastomer (A) is 95 to 25 parts by weight and the amount of the polyamide (B) is 5 to 75 parts by weight, provided that the total amount of the components (A) and (B) is 100 parts by weight.

3. A thermoplastic elastomer composition as claimed in claims 1 or 2, wherein the amount of the antioxidant is 5 parts by weight or less, based upon 100 parts by weight of the halogenated isobutylene elastomer.

4. A thermoplastic elastomer composition as claimed in any one of claims 1 - 3, wherein the halogenated isobutylene elastomer is brominated poly(isobutylene-co-p-methylstyrene).

5. A thermoplastic elastomer composition as claimed in any one of claims 1 - 4, wherein the polyamide is at least one member selected from the group consisting of Nylon 6, Nylon 66, Nylon 11, Nylon 12, Nylon 69, Nylon 610, Nylon 46, Nylon MXD6, Nylon 6/66, and the copolymers thereof, and the blends thereof.

6. A method for making a thermoplastic elastomer composition comprising the steps of:
(i) forming a mixture comprising a halogenated isobutylene elastomer and at least one curative therefore,
(ii) producing pellets from the mixture formed in (i) and coating the resultant pellets with a granulator composed of a triphosphite antioxidant, either alone or in combination with other antioxidant(s), having a melting temperature of more than 70°C and less than 200°C as an anti-blocking agent by adding said antioxidant during the pelletization process,
(iii) providing a polyamide and additives, and
(iv) mixing the coated pellets produced in (ii ) and the polyamide under dynamic vulcanization conditions to produce a thermoplastic elastomer composition, wherein the elastomer is dispersed as a domain in a continuous phase of the polyamide.

## Patentansprüche

1. Thermoplastischer Elastomerzusammenasetzung mit verbesserter Dauerhaftigkeit, Wärmebeständigkeit und Flexibilität, die eine dynamisch vulkanisierte Mischung von (A) halogeniertem Isobutylenelastomer, (B) Polyamid und (C) Granulator umfasst, der aus Triphosphitantioxidationsmittel entweder allein oder in Kombination mit anderem Antioxidationsmittel oder anderen Antioxidationsmitteln zusammengesetzt ist und einen Schmelzpunkt von mehr als 70°C und weniger als 200°C aufweist, wobei das halogenierte Isobutylenelastomer (A) als Domäne in einer kontinuierlichen Phase aus Polyamid (B) dispergiert ist, das halogenierte Isobutylenelastomer (A) in Form von mit Granulator (C) beschichteten Pellets vorliegt und in Gegenwart des Granulators (C) als Antiblockingmittel dynamisch vulkanisiert ist.

2. Thermoplastische Elastomerzusammensetzung nach Anspruch 1, bei der die Menge des halogenierten Isobutylenelastomers (A) 95 bis 25 Gewichtsteile und die Menge des Polyamids (B) 5 bis 75 Gewichtsteile beträgt, wobei die Gesamtmenge der Komponenten (A) und (B) 100 Gewichtsteile beträgt.

3. Thermoplastische Elastomerzusammensetzung nach Anspruch 1 oder 2, bei der die Menge an Antioxidationsmittel bezogen auf 100 Gewichtsteile des halogenierten Isobutylenelastomers 5 Gewichtsteile oder weniger beträgt.

4. Thermoplastische Elastomerzusammensetzung nach einem der Ansprüche 1 bis 3, bei der das halogenierte Isobutylenelastomer bromiertes Poly(Isobutylen-Co-p-Methylstyrol) ist.

5. Thermoplastische Elastomerzusammensetzung nach einem der Ansprüche 1 bis 4, bei der das Polyamid mindestens ein Mitglied ausgewählt aus der Gruppe bestehend aus Nylon 6, Nylon 66, Nylon 11, Nylon 12, Nylon 69, Nylon 610, Nylon 46, Nylon MXD6, Nylon 6/66 und Copolymeren davon sowie Mischungen derselben ist.

6. Verfahren zur Herstellung einer thermoplastischen Elastomerzusammensetzung, bei dem
(i) eine Mischung gebildet wird, die ein halogeniertes Isobutylenelastomer und mindestens ein Vulkanisierungsmittel dafür umfasst,
(ii) aus der in Stufe (i) gebildeten Mischung Pellets hergestellt werden und die resultierenden Pellets mit einem Granulator, der aus einem Triphosphitantioxidationsmittel entweder allein oder in Kombination mit anderem Antioxidationsmittel oder anderen Antioxidationsmitteln zusammengesetzt ist und eine Schmelztemperatur von mehr als 70°C und weniger als 200°C aufweist, als Antiblockingmittel beschichtet werden, indem das Antioxidationsmittel während des Pelletisierungsverfahrens zugesetzt wird,
(iii) ein Polyamid und Additive zur Verfügung gestellt werden und
(iv) die in Stufe (ii) hergestellten beschichteten Pellets und das Polyamid unter dynamischen Vulkanisierungsbedingungen zur Herstellung einer thermoplastischen Elastomerzusammensetzung gemischt werden, wobei das Elastomer als Domäne in einer kontinuierlichen Phase aus dem Polyamid dispergiert ist.

## Revendications

1. Composition d'élastomère thermoplastique avec une durabilité, une résistance à la chaleur et une flexibilité améliorées comprenant un mélange dynamiquement vulcanisé (A) d'un élastomère d'isobutylène halogéné, (B) de polyamide et (C) d'un granulateur composé d'un antioxydant de triphosphite, soit seuls soit en combinaison avec un ou plusieurs autres antioxydants, présentant un point de fusion supérieur à 70°C et inférieur à 200°C, l'élastomère (A) d'isobutylène halogéné étant dispersé comme un domaine en phase continue du polyamide (B), dans laquelle l'élastomère (A) d'isobutylène halogéné est présent sous forme de pellets enrobés du granulateur (C) et est dynamiquement vulcanisé en présence du granulateur (C) comme agent antiblocage.

2. Composition d'élastomère thermoplastique selon la revendication 1, dans laquelle la quantité de l'élastomère d'isobutylène halogéné (A) va de 95 à 25 parties en poids et la quantité du polyamide (B) va de 5 à 75 parties en poids, pour autant que la quantité totale des composants (A) et (B) fasse 100 parties en poids.

3. Composition d'élastomère thermoplastique selon les revendications 1 ou 2, dans laquelle la quantité de l'antioxydant est de 5 parties en poids ou moins, sur base de 100 parties en poids de l'élastomère d'isobutylène halogéné.

4. Composition d'élastomère thermoplastique selon l'une quelconque des revendications 1 à 3, dans laquelle l'élastomère d'isobutylène halogéné est le poly(isobutylène-co-p-méthylstyrène) bromé.

5. Composition d'élastomère thermoplastique selon l'une quelconque des revendications 1 à 4, dans laquelle le polyamide est au moins un élément sélectionné parmi le groupe comprenant le Nylon 6, le Nylon 66, le Nylon 11, le Nylon 12, le Nylon 69, le Nylon 610, le Nylon 46, le Nylon MXD6, le Nylon 6/66 et les copolymères de ceux-ci, ainsi que les mélanges de ceux-ci.

6. Procédé de fabrication d'une composition d'élastomère thermoplastique comprenant les étapes suivantes:
(i) formation d'un mélange comprenant un élastomère d'isobutylène halogéné et au moins un agent de durcissement à cet effet,
(ii) production de pellets à partir du mélange formé en (i) et enrobage des pellets obtenus avec un granulateur composé d'un antioxydant de triphosphite, soit seuls soit en combinaison avec un ou plusieurs autres antioxydants, avec une température de fusion de plus de 70°C et de moins de 200°C comme agent antiblocage par addition dudit antioxydant pendant le processus de pelletisation,
(iii) accès à un polyamide et à des additifs, et
(iv) mélange des pellets enrobés produits en (ii) et du polyamide dans des conditions de vulcanisation dynamique pour produire une composition d'élastomère thermoplastique, dans laquelle l'élastomère est dispersé comme un domaine en phase continue du polyamide.
